# EUROPÄISCHE PATENTSCHRIFT

(11) **EP 2 554 499 B1**
(45) Veröffentlichungstag und Bekanntmachung des Hinweises auf die Patenterteilung: **26.07.2017**
(21) Anmeldenummer: 12171478.6
(22) Anmeldetag: 11.06.2012
(51) Int. Cl.: B65G 47/51

(54) **Speichervorrichtung für eine Abfüllanlage und Getränkeabfüllanlage mit einer solchen Spiechervorrichtung**
Storage device for a dispensing assembly and drinks dispensing assembly with such a storage device
Dispositif de stockage pour une installation de remplissage et une installation de remplissage de boissons avec un tel dispositif de stockage

(30) Priorität: 04.08.2011 DE 102011080441
(43) Veröffentlichungstag der Anmeldung: 06.02.2013
(73) Patentinhaber: Krones AG, 93073 Neutraubling (DE)
(72) Erfinder: Hüttner, Johann, 84066 Mallersdorf-Pfaffenberg (DE); Seger, Martin, 92318 Neumarkt (DE); Lee, Kyoung-Won, 93047 Regensburg (DE); Hifinger, Toni, 93049 Regensburg (DE)
(74) Vertreter: Grünecker Patent- und Rechtsanwälte PartG mbB

(56) Entgegenhaltungen:
- EP-A1- 1 645 340
- WO-A1-2007/123401
- WO-A1-2011/131704
- DE-A1- 3 711 688
- DE-A1- 4 133 114
- DE-A1- 19 856 649
- DE-A1- 19 910 683
- DE-A1-102008 013 951
- DE-A1-102008 035 004
- JP-A- H0 551 087

## Beschreibung

Die Erfindung betrifft eine Speichervorrichtung für eine Abfüllanlage zum Zwischenspeichern von Läufern, die zur Aufnahme von Behältern ausgelegt sind, wobei die Läufer in einen Pufferstrom einbringbar sind, der in seiner Zwischenspeicherkapazität veränderbar ist, und eine Einschleusevorrichtung vorhanden ist, über die die Läufer aus einem Lagerbereich in den Pufferstrom einbringbar sind.

Die Läufer können auch als "Shuttle" bezeichnet werden und sind solche Transportvehikel, mittels der in der Abfüllanlage weiterverarbeitete, beispielsweise befüllte, Gebinde transportierbar sind. Aus dem Stand der Technik sind ähnliche Speichervorrichtungen bekannt, beispielsweise aus der gattungsgemäßen DE 41 33 114, die ein Fördersystem für Stückgut offenbart. Die DE 41 33 114 A1 offenbart ein Fördersystem für Stückgut, wie Flaschen, Behälter oder dergleichen, mit einem asynchronen Linearmotor als Antrieb. Um eine besonders einfache Ausgestaltung der dort verwendeten Läufer zu gewährleisten, ist dort ein die Förderbahn bildender Langstatormotor mit stationären elektrischen/elektronischen Komponenten und bürstenlosen Läufern zur Förderung der Stückgüter offenbart. Auch in diesem Fördersystem wird Stückgut auf die Läufer übergeben und dann in Bearbeitungsstationen bearbeitet.

Aus der DE 10 2008 035 004 A1 bzw. der WO 2010/009796 A2 sind auch Verfahren zur Handhabung von Behältern während des Transports durch Abfüllanlagen bekannt. In diesen beiden Druckschriften ist ein Verfahren zur Handhabung von Behältern, insbesondere von Flaschen aus einem Kunststoff, wie z. B. PP oder PET, oder von Beutelverpackungen mit Verschlusselementen, während des Transportes durch eine Abfüllanlage oder dergleichen, die mindestens eine Behandlungsvorrichtung, wie einen Füller, einen Verschließer, eine Inspektionsvorrichtung, einen Etikettierer oder dergleichen, umfasst, bekannt. Die Behälter zwischen den Behandlungsvorrichtungen der DE 10 2008 035 004 A1 werden in Übergabebereichen direkt oder mittels Transportvorrichtungen, wie Transportsternen. Transportbändern oder dergleichen, übergeben. Es ist die Aufgabe der vorliegenden Erfindung die Zwischenspeicherkapazität des Pufferstroms flexibel gestalten zu können. Dies soll mit einfachen und kostengünstigen Mitteln erreicht werden, wobei die Lösung besonders ausfallsicher sein soll und energieeffizient gestaltet sein soll.

Diese Aufgabe wird erfindungsgemäß durch die Speichervorrichtung gemäß Anspruch 1 gelöst.

Die Läufer sind dann als direkte Träger der in einer Abfüllanlage genutzten Gebinde ausgelegt.

Vorteilhafte Ausführungsformen sind in den Unteransprüchen beansprucht und werden nachfolgend näher erläutert.

So ist von Vorteil, wenn Mittel vorhanden sind, um die Geschwindigkeit jedes einzelnen Läufers unabhängig von der Geschwindigkeit der anderen Läufer zu regeln. Natürlich ist es auch möglich, dass die Läufer alle dieselbe Geschwindigkeit erhalten. Allerdings bietet ein individuelles Geschwindigkeitssteuern bzw. -regeln ein größeres Maß an Flexibilität. Während sich die bereits weiter im Pufferstrom befindlichen Läufer langsamer bewegen, können weiter stromaufwärts, etwa der Einschleusevorrichtung benachbart, mehrere Läufer mit erhöhter Geschwindigkeit hinterher geschickt werden, um schnell die Zwischenspeicherkapazität zu erhöhen. Sobald die stromaufwärts befindlichen Läufer auf die stromabwärts befindlichen Läufer aufgeschlossen haben, kann die Geschwindigkeit wieder an allen Läufern gleich eingestellt werden.

Es ist ferner von Vorteil, wenn erste Magnetkraftaufbringmittel vorhanden sind, um mittels Magnetkrafteinwirkung die Läufer in den Pufferstrom einzubringen und/oder darin zu bewegen. Dadurch ist es möglich, dass nun viele kleine Transporteinheiten bewegt werden, beispielsweise unter Nutzung eines Synchron-Motorenbetriebs.

Ein vorteilhaftes Ausführungsbeispiel wird dadurch gekennzeichnet, dass zumindest einer der Läufer zur Aufnahme und zum Transport eines Behälters, wie einer Flasche aus Glas oder PET, ausgelegt ist. Eine solche Speichervorrichtung kann dann in herkömmliche Abfülleinlagen einfach integriert werden.

Es ist ferner von Vorteil, wenn die Zwischenspeicherkapazität über die Geschwindigkeit der Läufer im Pufferstrom bestimmt ist. Die temporäre Pufferkapazität kann dann variiert werden. Alternativ können die Läufer schwerkraftbedingt eine Hangstrecke herunter laufen und werden kurz vor einem unteren Pulk-Ende sanft auf eine gewisse Geschwindigkeit abgebremst und an das Ende angefügt. Die Hangstrecke kann ringförmig ausgebildet sein.

Es ist beispielsweise auch möglich, dass ein Umlenkmittel zur Festlegung der Länge des Pufferstroms vorhanden ist, um die Zwischenspeicherkapazität zu beeinflussen. Je länger der Pufferstrom ist, also je weiter das Umlenkmittel von einer Einschleusevorrichtung entfernt ist, desto mehr Läufer können zwischengespeichert werden.

Um dies besonders einfach zu bewerkstelligen, ist es von Vorteil, wenn das Umlenkmittel als in seinem Abstand zur Einschleusevorrichtung veränderbarer Schlitten ausgebildet ist.

Wenn der Schlitten zur Bewirkung einer Umlenkung der Läufer aus einer ersten Pufferstromrichtung in eine dazu entgegengesetzte zweite Pufferstromrichtung ausgelegt ist, so wird nur relativ wenig Raum für eine solche Speichervorrichtung benötigt. Eine kompakte Speichervorrichtungsausgestaltung ist dann erreicht.

Es ist von Vorteil, wenn zweite Magnetkraftaufbringmittel vorhanden sind und ausgelegt sind, den Schlitten mittels Magnetkraft in seiner Position zu verändern

Auch ist es von Vorteil, wenn die Läufer auf Schienen gleitbar gelagert sind, da dann besonders wenig Antriebsenergie bei gleichzeitig vorhandener guter Führung benötigt ist.

Wenn der Pufferstrom im Wesentlichen horizontal oder in einer vertikal angeordneten Ebene verläuft, so kann eine bessere Zugänglichkeit erreicht werden. Der Pufferstrom umfasst erfindungsgemäß Weichenstellen, in denen Läufer in und/oder aus dem Pufferstrom ein- und/oder ausgliederbar sind, wobei die Einschleusevorrichtung eine solche Weichenstelle umfasst. Solche Abzweigungen ermöglichen Reserveläufer oder Läufer mit anderen Befestigungsvorrichtungen für die Behälter einzuschleusen oder auszuschleusen. Insbesondere lassen sich auf diese Weise Bypassströme erzeugen, die zu einer wesentlichen Verlängerung oder Verkürzung des Pufferstroms führen. Bei Betätigung einer solchen Weichenstelle lässt sich dann teilweise mit großer Wirkung die Zwischenspeicherkapazität verändern. Die Variabilität der Speichervorrichtung wird erhöht. Der Energieverbrauch wird reduziert und nur ein geringer Bedarf an Bodenfläche ist vorhanden. Zudem verkürzt sich die Stillstandszeit der Maschine bei einem Defekt, da defekte Läufer von der Schiene oder den Schienen genommen werden können, um sie durch intakte Läufer zu ersetzen. Die defekten Läufer können dann außerhalb des Produktionsprozesses repariert bzw. gewartet werden. Außerdem kann die blockierte Stelle über die Abzweigung umfahren werden

Die Erfindung betrifft auch eine Getränkeabfüllanlage mit einer erfindungsgemäßen Speichervorrichtung.

Die Erfindung wird mit Hilfe einer Zeichnung näher erläutert, in der drei Ausführungsbeispiele dargestellt sind. Es zeigen
- Fig. 1: eine Draufsicht auf eine erste beispielhafte Speichervorrichtung,
- Fig. 2: eine Draufsicht auf eine zweite beispielhafte Speichervorrichtung und
- Fig. 3: eine erfindungsgemäße Speichervorrichtung.

Die Figuren sind lediglich schematischer Natur und dienen nur dem Verständnis der Erfindung. Die gleichen Elemente sind mit denselben Bezugszeichen versehen.

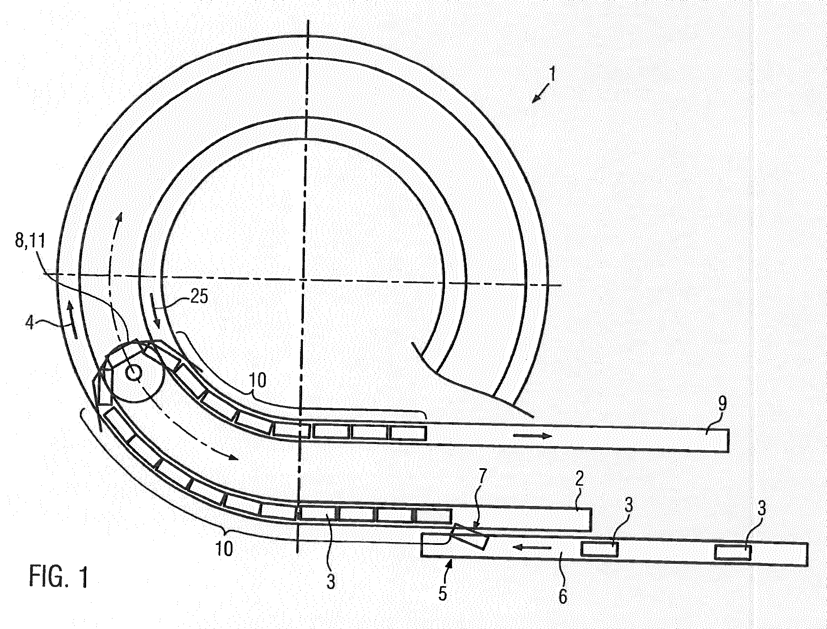

In Fig. 1 ist ein erstes Beispiel einer ersten Speichervorrichtung in einer Draufsicht dargestellt. Die Speichervorrichtung hat das Bezugszeichen 1.

Eine solche Speichervorrichtung 1 wird bei einer Abfüllanlage verwendet, wobei in der Abfüllanlage Gebinde, wie Flaschen, Beutel oder Dosen bearbeitet werden. In solchen Abfüllanlagen werden beispielsweise Flaschen befüllt, insbesondere solche aus Glas oder PET.

Solche Abfüllanlagen umfassen meistens ferner Füller, Inspektionsvorrichtungen, Erhitzer und Etikettierer.

Die Speichervorrichtung 1 weist eine erste Schiene 2 auf, auf der Läufer 3 in eine erste Richtung 4 transportiert werden. Die Läufer 3 werden an einer Einschleusevorrichtung 5 aus einem Lagerbereich 6 auf die erste Schiene 2 verbracht. Die Einschleusevorrichtung 5 umfasst für diesen Zweck eine Weichenstelle 7.

An der Weinhenstelle 7 tritt dann ein bis dahin im Lagerbereich 6 befindlicher Läufer 3 in den sich von der Weichenstelle 7 bis zu einer Umlenkstelle 8 entlang der Schiene 2 erstreckenden und dann weiter entlang einer zweiten Schiene 9 von der Umlenkstelle 8 erstreckenden Pufferstrom 10 ein. An der Umlenkstelle 8 ist ein Umlenkmittel 11 vorhanden, das als Schlitten 12 ausgebildet ist und verschiebbar auf den beiden Schienen 2 und 9 gelagert ist.

Die Läufer 3 werden als direkte Träger für die nicht dargestellten Behälter verwendet. Sie sind zur Aufnahme und zum Transport eines Behälters, wie einer Flasche aus Glas oder PET, ausgelegt. Je nach Bedarf werden die Läufer 3 in den Pufferstrom 10 geschickt. Alle nicht benötigten Läufer 3 befinden sich in einem auch als Starterbahnhof bezeichneten Gebiet des Lagerbereichs 6. Die Geschwindigkeitsregelung der Läufer 3 und letztlich auch des Pufferstroms 10 bestimmt die Pufferkapazität, also die Zwischenspeicherkapazität der Speichervorrichtung 1.

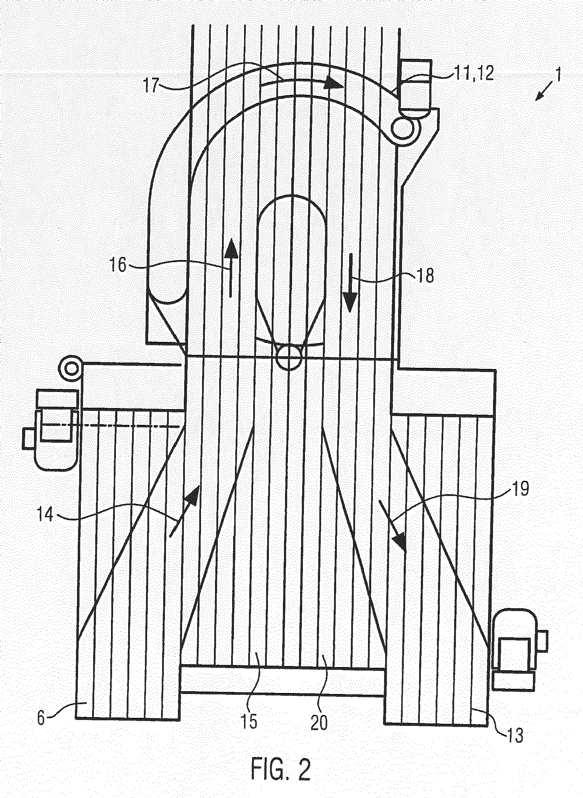

In Fig. 2 ist ein zweites Beispiel einer Speichervorrichtung 1 dargestellt. Die Läufer 3, Gebinde, Behälter oder ganz allgemein Stückgut sind hier nicht dargestellt, werden aber auf einem den Lagerbereich 6 umfassenden primären Förderband heran geschafft und bei Nicht-mehr-Bedarf auf einem sekundären Förderband aus dem Abfuhrbereich 13 entfernt. Die Läufer 3, Gebinde, Behälter oder Stückgut können vom Abfuhrbereich 13 zum Lagerbereich 6 über einen separaten Kreislauf verbracht werden. Die Läufer 3, Gebinde, Behälter oder Stückgut werden dann gemäß der Bewegungsrichtung 14 auf ein erstes Transportband 15 befördert, dann in Bewegungsrichtung 16 bis zu dem Umlenkmittel 11 verbracht, um dort die Bewegungsrichtung 17 aufzunehmen und danach entgegengesetzt der Bewegungsrichtung 14 sich in Bewegungsrichtung 18 zu bewegen. An einer erneuten Weichenstelle werden die Läufer 3, Gebinde. Behälter oder Stückgut optional in Bewegungsrichtung 19 umgelenkt.

Bei einem solchen Beispiel wird die Positionierung des als Schlitten 12 ausgebildeten Umlenkmittels 11 durch magnetische Krafteintragung erreicht. Der Schlitten 12 selber wird dabei zu einem läuferähnlichen Bauteil.

Dadurch kann ein Wegfall von Schleppketten und/oder Zahnriemen erreicht werden, sowie eine offenere Bauweise ohne Überbauten erreicht werden.

An der zweiten Weichenstelle werden die Läufer 3, Gebinde, Behälter oder Stückgut vom zweiten Band 20 in Bewegungsrichtung 19 abgeleitet.

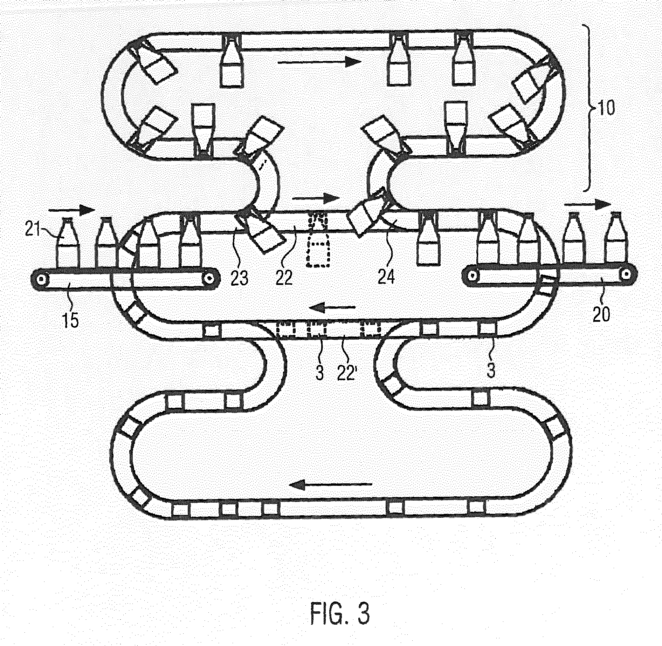

Das in Fig. 3 dargestellte Ausführungsbeispiel gemäß der Erfindung zeigt, wie flaschenartige Behälter 21 über ein erstes Band zugeführt werden, von je einem Läufer 3 aufgenommen werden und dann in einen Pufferstrom 10 eingegliedert werden. Im Bereich eines zweiten Bandes 22 werden die Behälter 21 dann wieder aus dem Pufferstrom 10 entlassen und weitergefördert sowie weiterbehandelt. Eine Bypassstrecke 23 ist visualisiert, die zwischen zwei Weichenstellen 23 und 24 eine Verkürzung des Pufferstrom 10, wenn angesteuert, ermöglicht. Auf diese Weise können auch Behälter 21 an eine neue Stelle im Pufferstrom 10 verbracht werden. Auch auf der "Leer-Seite" des Pufferkreislaufs ist eine solche Bypassstrecke 22' realisiert.

## Patentansprüche

1. Speichervorrichtung (1) einer Abfüllanlage zum Zwischenspeichern von Läufern (3), die zur Aufnahme von Behältern (21) ausgelegt sind, wobei die Speichervorrichtung (1) wenigstens zwei Läufer (3), einen Pufferstrom (10) und eine Einschleusevorrichtung (5) umfasst, wobei die Läufer (3) in den Pufferstrom (10) einbringbar sind, der in seiner Zwischenspeicherkapazität an Läufern (3) veränderbar ist, und die Läufer (3) aus einem Lagerbereich (6) über die Einschleusevorrichtung (5) in den Pufferstrom (10) einbringbar sind, **dadurch gekennzeichnet, dass**
die Läufer (3) unabhängig voneinander in den Pufferstrom (10) einbringbar sind; wobei die Speichervorrichtung ein erstes Band umfasst, über das der Speichervorrichtung flaschenartige Behälter zugeführt werden können, wobei die Behälter von je einem Läufer aufgenommen und dann in den Pufferstrom (10) eingegliedert werden können;
wobei die Speichervorrichtung ein zweites Band umfasst, in das die Behälter aus dem Pufferstrom entlassen und weitergefördert, sowie weiterbehandelt werden können;
wobei die Speichervorrichtung zwei Weichenstellen, sowie eine zwischen den Weichenstellen angeordnete Bypasstrecke umfasst, wobei die Weichenstellen angesteuert werden können, sodass ein Behälter von der ersten Weichenstelle durch die Bypassstrecke an die zweite Weichenstelle transportiert werden kann und die von diesem Behälter im Pufferstrom zurückgelegte Strecke dabei verkürzt wird.

2. Speichervorrichtung (1) nach Anspruch 1, **dadurch gekennzeichnet, dass** erste Magnetkraftaufbringmittel vorhanden sind, um mittels Magnetkrafteinwirkung die Läufer (3) in den Pufferstrom (10) einzubringen und/oder darin zu bewegen.

3. Speichervorrichtung (1) nach einem der Ansprüche 1 oder 2, **dadurch gekennzeichnet, dass** zumindest einer der Läufer (3) zum Transport einer Flasche aus Glas oder PET, ausgelegt ist.

4. Speichervorrichtung (1) nach einem der Ansprüche 1 bis 3, **dadurch gekennzeichnet, dass** der Pufferstrom (10) im Wesentlichen horizontal oder in einer vertikal angeordneten Ebene verläuft.

5. Getränkeabfüllanlage mit einer Speichervorrichtung (1) nach einem der Ansprüche 1 bis 4.

## Claims

1. Storage device (1) for a filling line for intermediately storing runners (3) designed to accommodate containers (21), wherein the storage device (1) comprises at least two runners (3), a buffer stream (10) and an introduction device (5), wherein the runners (3) can be introduced into the buffer stream (10) whose intermediate storage capacity of runners (3) is variable, and the runners (3) can be introduced into the buffer stream (10) from a storage area (6) via the introduction device (5), **characterized in that** the runners (3) can be introduced into the buffer stream (10) independently of each other; wherein the storage device comprises a first belt via which bottle-like containers can be supplied to the storage device, wherein the containers can be taken up by one runner each and can then be incorporated into the buffer stream (10); wherein the storage device comprises a second belt into which the containers can be released from the buffer stream and transported and processed further;
wherein the storage device comprises two distributing points and a bypass section arranged between the distributing points,
wherein the distributing points can be controlled such that a container can be transported from the first distributing point to the second distributing point via the bypass section and the distance travelled by the container in the buffer stream can thus be shortened.

2. Storage device (1) according to claim 1, **characterized in that** first magnetic force application means are provided to introduce the runners (3) into the buffer stream (10) and/or move them in the buffer stream by means of magnetic force application.

3. Storage device (1) according to one of claims 1 to 2, **characterized in that** at least one of the runners (3) is designed to transport a glass or PET bottle.

4. Storage device according to one of claims 1 to 3, **characterized in that** the buffer stream (10) extends essentially horizontally or in a vertically disposed plane.

5. Beverage filling line having a storage device (1) according to one of claims 1 to 4.

## Revendications

1. Dispositif de stockage tampon (1) pour une installation de remplissage, destiné à assurer le stockage tampon de chariots (3) conçus pour accueillir des contenants (21), le dispositif de stockage tampon (1) comprenant au moins deux chariots (3), un flux de stockage tampon (10) et un dispositif d'insertion (5), les chariots (3) pouvant être insérés dans le flux de stockage tampon (10) dont la capacité de stockage tampon en chariots (3) est variable, et les chariots (3) pouvant être insérés, à partir d'une zone de stockage (6), dans le flux de stockage tampon (10) par l'intermédiaire du dispositif d'insertion (5),
**caractérisé**
**en ce que** les chariots (3) peuvent être insérés indépendamment les uns des autres dans le flux de stockage tampon (10), en ce que le dispositif de stockage tampon comprend une première bande par l'intermédiaire de laquelle des contenants du type bouteille peuvent être amenés au dispositif de stockage tampon, en ce que les contenants sont repris respectivement chacun par un chariot et peuvent ensuite être incorporés dans le flux de stockage tampon (10), en ce que le dispositif de stockage tampon comprend une deuxième bande sur laquelle peuvent être évacués les contenants en provenance du flux de stockage tampon, pour y poursuivre leur transport et leur traitement, en ce que le dispositif de stockage tampon comprend deux zones d'aiguillage ainsi qu'un parcours de dérivation agencé entre les zones d'aiguillage, et en ce que les zones d'aiguillage peuvent être commandées de manière telle qu'un contenant puisse être transporté à partir de la première zone d'aiguillage, à travers le parcours de dérivation, jusqu'à la deuxième zone d'aiguillage, en raccourcissant ainsi la distance parcourue par ce contenant dans le flux de stockage tampon.

2. Dispositif de stockage tampon (1) selon la revendication 1, **caractérisé en ce que** sont prévus des premiers moyens d'application de force magnétique pour, à l'aide d'une action de force magnétique, insérer les chariots (3) dans le flux de stockage tampon (10) et/ou les y déplacer.

3. Dispositif de stockage tampon (1) selon l'une des revendications 1 ou 2, **caractérisé en ce que** l'un au moins des chariots (3) est conçu pour le transport d'une bouteille en verre ou en PET.

4. Dispositif de stockage tampon (1) selon l'une des revendications 1 à 3, **caractérisé en ce que** le flux de stockage tampon (10) s'étend sensiblement de manière horizontale ou bien s'étend dans un plan agencé verticalement.

5. Installation de remplissage pour boissons comprenant un dispositif de stockage tampon (1) selon l'une des revendications 1 à 4.
